# EUROPÄISCHE PATENTANMELDUNG

(11) **EP 4 687 236 A1**
(43) Veröffentlichungstag der Anmeldung: **04.02.2026**
(21) Anmeldenummer: 25189823.5
(22) Anmeldetag: 16.07.2025
(51) Int. Cl.: H02B 13/045, H02G 5/00, H02G 5/06, F16L 25/01, F16L 27/12

(54) **SCHIEBEKOMPENSATOR MIT KLEMMRING**

(30) Priorität: 31.07.2024 DE 102024207272
(71) Anmelder: Siemens Energy Global GmbH & Co. KG, 81739 München (DE)
(72) Erfinder: Beutel, Stefan, 10555 Berlin (DE); Ludenia, Dan, 14621 Schönwalde-Glien OT Schönwalde-Siedlung (DE); Halm, Christian, 15732 Schulzendorf (DE)

(57) **Zusammenfassung**

Die vorliegende Erfindung betrifft einen Schiebekompensator (1) für eine gasisolierte elektrische Energieübertragungsvorrichtung, der einen ersten Rohrabschnitt (2) und einen zweiten Rohrabschnitt (3), die koaxial ausgerichtet und entlang einer Hauptachse (100) relativ zueinander beweglich sind, umfasst, wobei der erste und zweite Rohrabschnitt (2, 3) jeweils einen Teil eines Kapselungsvolumens (90) begrenzen. Weiterhin ist ein Kolbenelement (4) vorgesehen, das starr mit dem ersten Rohrabschnitt (2) verbunden ist und eine Zylinderwand (38), die starr mit dem zweiten Rohrabschnitt (3) verbunden ist, wobei das Kolbenelement (4) abdichtend und verschiebbar zwischen einer inneren Mantelfläche der Zylinderwand (38) und einer äußeren Mantelfläche des zweiten Rohrabschnitts (3) eingepasst ist, wodurch ein Kompensationsvolumen (92) begrenzt wird. Die starre Verbindung zwischen dem ersten Rohrabschnitt (2) und dem Kolbenelement (4) ist mittels eines Klemmrings (6) hergestellt.

## Beschreibung

Die vorliegende Erfindung bezieht sich auf einen Schiebekompensator für eine gasisolierte elektrische Energieübertragungsvorrichtung, vorzugsweise eine Hochspannungs- oder Höchstspannungsanlage.

Gasisolierte elektrische Energieübertragungsvorrichtungen werden aufgrund ihrer kompakten Bauweise, hohen Zuverlässigkeit und geringen Wartungsanforderungen häufig in Hochspannungs- und Höchstspannungssystemen eingesetzt. Diese Vorrichtungen umfassen typischerweise Leiter, die in geerdeten Metallgehäusen eingeschlossen sind, die mit Isoliergas wie Schwefelhexafluorid (SF6), SF6-N2-Gasgemisch und / oder Clean Air unter höherem oder hohem Druck gefüllt sind.

Eine Herausforderung bei der Konstruktion solcher Systeme besteht darin, die thermische Ausdehnung und Kontraktion von Komponenten sowie mechanische Belastungen durch äußere Kräfte wie Erdbeben oder Bodenbewegungen zu berücksichtigen.

Schiebekompensatoren werden häufig eingesetzt, um eine axiale Bewegung zwischen verschiedenen Abschnitten der Anlage zu ermöglichen und gleichzeitig eine gasdichte Abdichtung aufrechtzuerhalten.

Ein anderer Ansatz beinhaltet die Verwendung von Bälgen oder flexiblen Abschnitten, um Bewegungen aufzunehmen. Obwohl effektiv, können diese Komponenten komplex in der Herstellung sein und möglicherweise Einschränkungen hinsichtlich des Bewegungsumfangs aufweisen. Sie können auch anfälliger für Ermüdung über die Betriebsdauer sein, was möglicherweise zu vorzeitigem Versagen führt.

Es besteht ein anhaltender Bedarf an verbesserten Schiebekompensator-Designs, die eine zuverlässige Abdichtung bieten, ausreichende Bewegung aufnehmen können und langfristige Haltbarkeit bei minimalen Wartungsanforderungen bieten. Idealerweise sind solche Designs auch relativ einfach herzustellen und zu montieren, was zur Kostenreduzierung und Verbesserung der Gesamtsystemzuverlässigkeit beiträgt.

Ausgehend von dem bekannten Stand der Technik ist es eine Aufgabe der vorliegenden Erfindung, einen verbesserten Schiebekompensator für eine gasisolierte elektrische Energieübertragungsvorrichtung bereitzustellen, der eine zuverlässige Abdichtung, ausreichende Bewegungsaufnahme und langfristige Haltbarkeit bietet und gleichzeitig einfach herzustellen und zu montieren ist.

Die Aufgabe wird durch einen Schiebekompensator mit den Merkmalen des Anspruchs 1 gelöst. Vorteilhafte Weiterbildungen ergeben sich aus den abhängigen Ansprüchen, der Beschreibung und den Figuren.

Entsprechend wird ein Schiebekompensator für eine gasisolierte elektrische Energieübertragungsvorrichtung vorgeschlagen, der einen ersten Rohrabschnitt und einen zweiten Rohrabschnitt umfasst, die koaxial ausgerichtet und entlang einer Hauptachse relativ zueinander beweglich sind, wobei der erste und zweite Rohrabschnitt jeweils einen Teil eines Kapselungsvolumens begrenzen. Weiterhin ist ein Kolbenelement vorgesehen, das starr mit dem ersten Rohrabschnitt verbunden ist, und eine Zylinderwand, die starr mit dem zweiten Rohrabschnitt verbunden ist, wobei das Kolbenelement abdichtend und verschiebbar zwischen einer inneren Mantelfläche der Zylinderwand und einer äußeren Mantelfläche des zweiten Rohrabschnitts eingepasst ist, wodurch ein Kompensationsvolumen begrenzt wird.

Erfindungsgemäß ist die starre Verbindung zwischen dem ersten Rohrabschnitt und dem Kolbenelement mittels eines Klemmrings hergestellt.

Eine solche Konfiguration bietet den Vorteil einer vereinfachten und zuverlässigeren Verbindung zwischen dem ersten Rohrabschnitt und dem Kolbenelement, was eine einfachere Montage und Wartung ermöglicht und gleichzeitig eine sichere Befestigung gewährleistet.

Die Verwendung des Klemmrings führt weiterhin dazu, dass die Druckbelastbarkeit des Schiebekompensators und insbesondere der Verbindung zwischen dem ersten Rohrabschnitt und dem Kolbenelement verbessert werden kann. Dies ist unter anderem der Tatsache geschuldet, dass bei der Verwendung des Klemmrings anstelle einer aus dem Stand der Technik bekannten Gewindeverbindung zwischen dem ersten Rohrabschnitt und dem Kolbenelement eine durch das Schneiden und Bereitstellen des Gewindes hervorgerufene Materialschwächung vermieden werden kann.

Mit anderen Worten können bei der vorgeschlagenen Verbindung zwischen dem ersten Rohrabschnitt und dem Kolbenelement höhere Materialquerschnitte verwendet werden, die zu einer verbesserten Druckbelastbarkeit des Schiebekompensators und einer höheren Zuverlässigkeit führen.

Durch das direkte Anliegen des ersten Rohrabschnitts an dem Kolbenelement kann gegenüber der aus dem Stand der Technik bekannten Schraubverbindung auch eine Verlängerung des möglichen Kompensationswegs erreicht werden, denn es gibt in der vorgeschlagenen Ausbildung keine überlappenden Komponenten, die den Schiebekompensator verkürzen würden.

Der Klemmring kann zwei radial nach innen ragende Vorsprünge umfassen, wobei der erste der Vorsprünge in eine Verbindungsnut in einem äußeren Mantel des ersten Rohrabschnitts eingreift und der zweite der Vorsprünge in eine Verbindungsnut in einem äußeren Mantel des Kolbenelements eingreift.

Mit anderen Worten bildet der Klemmring mit seinen beiden Vorsprüngen eine Klammer aus, die sich in Umfangsrichtung erstreckt und die sowohl in den ersten Rohrabschnitt als auch in das Kolbenelement eingreift. Der erste Rohrabschnitt und das Kolbenelement werden entsprechend durch diese mittels des Klemmrings ausgebildeten Klammer starr miteinander verbunden.

Durch den Eingriff der Vorsprünge in die zugeordneten Verbindungsnuten des ersten Rohrabschnitts beziehungsweise des Kolbenelements wird entsprechend eine formschlüssige Verbindung mit dem Klemmring hergestellt. Der Formschluss dient hier dazu, die starre Verbindung herzustellen. Damit muss der Klemmring nur daran gehindert werden, aus diesem Formschluss herauszurutschen. Eine hohe Klemmkraft ist aber nicht nötig.

Die starre Verbindung muss zur Aufrechterhaltung der Funktion des Schiebekompensators nur in der durch die Hauptachse definierten Richtung vorliegen, damit die durch einen Innendruck auftretenden Kräfte in Richtung der Hauptachse zwischen dem Kolbenelement und dem ersten Rohrabschnitt kompensiert werden können.

Die starre Anbindung zwischen dem ersten Rohrabschnitt und dem Kolbenelement muss nicht zu einer abdichtenden Verbindung zwischen den beiden Elementen führen - vielmehr ist ein Austausch von Isolationsfluid zwischen dem Kapselungsvolumen und dem Kompensationsvolumen essentiell für die Funktion des Kompensationsmechanismus.

Der radiale Durchmesser des ersten Vorsprungs des Klemmrings kann dem radialen Durchmesser des zweiten Vorsprungs gleichen oder identisch zu diesem sein und der Klemmring kann bevorzugt eine symmetrische Innenseite aufweisen.

Durch diese Ausbildung kann eine einfache starre Verbindung zwischen dem ersten Rohrabschnitt und dem Kolbenelement hergestellt werden, wenn die jeweiligen aneinander anliegenden Endabschnitte des ersten Rohrabschnitts und des Kolbenelements sehr ähnliche oder gleiche Durchmesser, insbesondere sehr ähnliche oder gleiche Außendurchmesser ihrer jeweiligen Mantelbereiche aufweisen.

In einer Alternative kann der Klemmring so ausgebildet sein, dass sich der radiale Durchmesser des ersten Vorsprungs von dem radialen Durchmesser des zweiten Vorsprungs unterscheidet und der Klemmring bevorzugt eine asymmetrische Innenseite aufweist.

Mittels eines auf diese Weise ausgebildeten Klemmrings kann eine einfache starre Verbindung zwischen dem ersten Rohrabschnitt und dem Kolbenelement hergestellt werden, wenn die jeweiligen aneinander anliegenden Endabschnitte des ersten Rohrabschnitts und des Kolbenelements unterschiedliche Durchmesser aufweisen, insbesondere unterschiedliche Außendurchmesser ihrer jeweiligen Mantelbereiche aufweisen.

Der Klemmring kann mindestens zweiteilig ausgebildet sein und die Teile des Klemmrings können mittels jeweils eines Verbindungsmittels, beispielsweise einer Verbindungsschraube, miteinander verbunden sein, um den ersten Rohrabschnitt mit dem Kolbenelement starr zu verbinden. Bevorzugt ist der Klemmring durch zwei Hälften ausgebildet, die jeweils mittels eines Verbindungsmittels miteinander verbunden sind.

Durch die zwei- oder mehrteilige Ausbildung des Klemmrings kann eine einfache Herstellung des Klemmrings und eine einfache aber sichere Montage des Schiebekompensators erreicht werden. Insbesondere ist es durch die zwei- oder mehrteilige Ausbildung des Klemmrings möglich, den ersten Rohrabschnitt und das Kolbenelement miteinander zu verbinden und dabei ein einfaches Handling des Klemmrings aufgrund der Mehrteiligkeit zu haben.

Das Kolbenelement kann mindestens eine Ausgleichsöffnung aufweisen, die das Kapselungsvolumen mit dem Kompensationsvolumen verbindet.

Auf diese Weise kann sichergestellt werden, dass ein Druckausgleich des Isolationsfluids zwischen dem Kompensationsvolumen und dem Kapselungsvolumen erreicht wird.

Bevorzugt ist mindestens eine Ausgleichsöffnung in Form einer Bohrung eingebracht, wobei die Bohrungsachse der Ausgleichsöffnung radial zur Hauptachse ausgerichtet ist.

Damit kann auf effiziente Weise ein sicherer Druckausgleich zwischen dem Kapselungsvolumen und dem Kompensationsvolumen erreicht werden.

Die Zylinderwand kann einstückig mit dem zweiten Rohrabschnitt ausgebildet sein, insbesondere einstückig mit diesem verbunden sein.

Durch die einstückige Ausbildung der Zylinderwand mit dem zweiten Rohrabschnitt kann das Kompensationsvolumen sicher und dicht bereitgestellt werden. Weiterhin lässt sich der zweite Rohrabschnitt so effizient und prozessgünstig mit der Zylinderwand ausbilden.

Eine Dichtungsnut kann in eine Wand des Kolbenelements eingebracht sein, die der äußeren Mantelfläche des zweiten Rohrabschnitts zugewandt ist, wobei die Dichtungsnut zur Aufnahme eines elastomeren Dichtungskörpers ausgebildet ist.

Mittels der Dichtungsnut und des darin eingelegten Dichtungskörpers kann das Kompensationsvolumen entsprechend sicher abgedichtet werden.

Eine Belüftungsöffnung, die in der Zylinderwand in einem dem Boden des Kolbenelements zugewendeten Bereich vorgesehen ist, der vom Kompensationsvolumen durch das Kolbenelement getrennt ist, kann vorgesehen sein.

Mittels der Belüftungsöffnung wird sichergestellt, dass der nach außen gerichtete Boden des Kolbenelements stets mit dem Umgebungsdruck in Kontakt steht. Mit anderen Worten wird mittels der Belüftungsöffnung sichergestellt, dass durch die axiale Bewegung des Kolbenelements beziehungsweise des Kompensationsmechanismus im angrenzenden Volumen kein Gegendruck und damit auch keine Gegenkraft entsteht. Damit wird ein sicherer Kompensationsmechanismus erreicht.

Der erste Rohrabschnitt, der zweite Rohrabschnitt, das Kolbenelement und die Zylinderwand können elektrisch leitfähig sein.

Durch die Bereitstellung der elektrischen Leitfähigkeit wird eine sichere Isolierung der innerhalb des Schiebekompensators liegenden elektrischen Leiter erreicht, denn der Schiebekompensator kann auf diese Weise geerdet werden.

Die oben genannte Aufgabe wird weiterhin durch ein Verfahren mit den Merkmalen des Anspruchs 1 gelöst. Vorteilhafte Weiterbildungen ergeben sich aus den Unteransprüchen, der Beschreibung und den Figuren.

Entsprechend wird ein Verfahren zum Bereitstellen eines Schiebekompensators für eine gasisolierte elektrische Energieübertragungsvorrichtung vorgeschlagen, wobei das Verfahren umfasst:
- Bereitstellen eines ersten Rohrabschnitts und eines zweiten Rohrabschnitts;
- Aufschieben eines Kopfringelements auf den ersten Rohrabschnitt;
- starres Verbinden eines Kolbenelements mit dem ersten Rohrabschnitt;
- koaxiales Ausrichten des ersten Rohrabschnitts und des zweiten Rohrabschnitts;
- dichtendes Einpassen des Kolbenelements zwischen einer inneren Mantelfläche der Zylinderwand und einer äußeren Mantelfläche des zweiten Rohrabschnitts
- Verbinden des zweiten Rohrabschnitts mit dem auf dem ersten Rohrabschnitt aufgeschobenen Kopfringelement.

Erfindungsgemäß umfasst das Verfahren den Schritt des starren Verbindens des Kolbenelements mit dem ersten Rohrabschnitt durch:
- Bereitstellen eines Klemmrings und Verbinden des Kolbenelements und des ersten Rohrabschnitts mit dem Klemmring.

Dieses Verfahren bietet den Vorteil eines vereinfachten Montageprozesses, der eine ordnungsgemäße Ausrichtung und sichere Verbindung der Komponenten gewährleistet und die Fertigungszeit und -kosten reduziert, während die Integrität des Schiebekompensators erhalten bleibt.

Die Zylinderwand ist bevorzugt starr an dem zweiten Rohrabschnitt vorgesehen, beispielweise einstückig.

Der erste Rohrabschnitt und der zweite Rohrabschnitt sind bevorzugt so koaxial zueinander angeordnet, dass sie sich relativ zueinander entlang einer Hauptachse bewegen können und so dass sie zumindest teilweise ein Kapselungsvolumen begrenzen.

Durch das dichtende Einpassen des Kolbenelements zwischen die innere Mantelfläche der Zylinderwand und der äußeren Mantelfläche des zweiten Rohrabschnitts wir bevorzugt ein Kompensationsvolumen gebildet beziehungsweise eingeschlossen.

Der der Klemmring kann zwei radial nach innen ragende Vorsprünge aufweisen und das Verfahren kann dann ferner umfassen:
- das Einführen des ersten Vorsprungs des Klemmrings in eine Verbindungsnut in einem äußeren Mantel des ersten Rohrabschnitts; und
- das Einführen des zweiten Vorsprungs des Klemmrings in eine Verbindungsnut in einem äußeren Mantel des Kolbenelements.

Auf diese Weise wird mittels des Klemmrings quasi eine Klammer bereitgestellt, die den ersten Rohrabschnitt und das Kolbenelement über ihre jeweiligen Verbindungsnuten miteinander verbindet.

Der Klemmring kann zumindest zwei Teile aufweisen und alle Teile des Klemmrings können mittels Verbindungsschrauben miteinander verbunden werden, um den ersten Rohrabschnitt mit dem Kolbenelement zu verbinden.

Das zweiteilige Design des Klemmrings mit seinen radial nach innen ragenden Vorsprüngen, die in Nuten am ersten Rohrabschnitt und am Kolbenelement passen, ermöglicht eine einfache Montage und Demontage. Diese Funktion vereinfacht Wartungsverfahren und reduziert Ausfallzeiten während Inspektionen oder Reparaturen. Darüber hinaus bietet die Verwendung von Verbindungsschrauben zum Verbinden der beiden Hälften des Klemmrings einen sicheren Verschlussmechanismus, der bei Bedarf leicht bedient werden kann.

Die Option einer asymmetrischen Innenseite des Klemmrings zur Aufnahme von Durchmesserunterschieden zwischen dem ersten Rohrabschnitt und dem Kolbenelement bietet Flexibilität in Design und Fertigung. Diese Funktion ermöglicht die Optimierung der Komponentenabmessungen, ohne die Integrität der Verbindung zu beeinträchtigen.

Bevorzugte weitere Ausführungsformen der Erfindung werden anhand der folgenden Beschreibung der Figuren näher erläutert. Dabei zeigen:
- Figur 1: zeigt eine Schnittansicht eines Schiebekompensators gemäß Aspekten der vorliegenden Offenbarung in einer ersten Ausführungsform;
- Figur 2: zeigt einen vergrößerten Ausschnitt aus der Schnittansicht des Schiebekompensators aus Figur 1;
- Figur 3: zeigt eine seitliche Außenansicht des Schiebekompensators aus den Figuren 1 und 2, wobei der zweite Rohrabschnitt teilweise ausgeblendet ist;
- Figur 4: zeigt eine perspektivische Außenansicht des Schiebekompensators aus den Figuren 1-3, wobei der zweite Rohrabschnitt teilweise ausgeblendet ist;
- Figur 5: zeigt eine Schnittansicht eines Schiebekompensators gemäß Aspekten der vorliegenden Offenbarung in einer zweiten Ausführungsform;
- Figur 6: zeigt einen vergrößerten Ausschnitt aus der Schnittansicht des Schiebekompensators aus Figur 5;
- Figur 7: zeigt eine seitliche Außenansicht des Schiebekompensators aus den Figuren 5 und 6, wobei der zweite Rohrabschnitt teilweise ausgeblendet ist; und
- Figur 8: zeigt eine perspektivische Außenansicht des Schiebekompensators aus den Figuren 5-7 wobei der zweite Rohrabschnitt teilweise ausgeblendet ist.

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

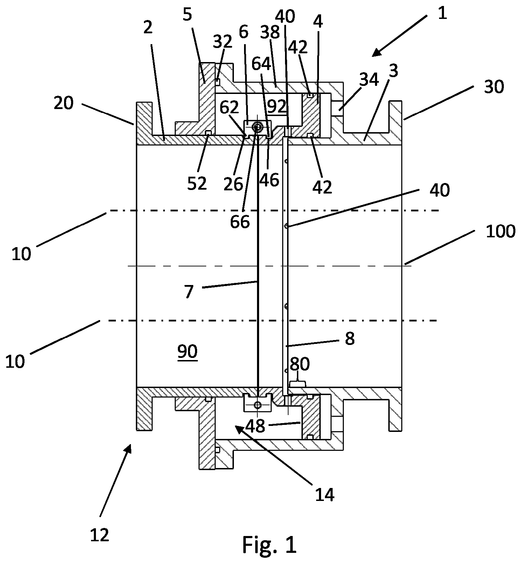

In der Figur 1 ist ein Schiebekompensator 1 für eine gasisolierte elektrische Energieübertragungsvorrichtung in einer schematischen Schnittdarstellung gezeigt.

Der Schiebekompensator 1 umfasst einen ersten Rohrabschnitt 2 und einen zweiten Rohrabschnitt 3, die koaxial zueinander entlang einer Hauptachse 100 ausgerichtet sind. Der erste Rohrabschnitt 2 und der zweite Rohrabschnitt 3 sind relativ zueinander entlang der durch die Hauptachse 100 definierten Richtung beweglich und begrenzen jeweils einen Teil eines Kapselungsvolumens 90.

In dem Kapselungsvolumen 90 können hier nur schematisch angedeutete elektrische Leiter 10 aufgenommen sein. Typischer Weise sind drei elektrische Leiter 10 in dem Kapselungsvolumen 90 aufgenommen.

Das Kapselungsvolumen 90 ist in der finalen Einbausituation im Betrieb mit einem Isolationsfluid, beispielsweise einem Isoliergas wie Schwefelhexafluorid (SF6), SF6-N2-Gasgemisch und / oder Clean Air unter höherem oder hohem Druck, gefüllt.

Das Isolationsfluid isoliert die elektrischen Leiter 10 voneinander und von den Komponenten des Schiebekompensators 1.

Das von den Komponenten des Schiebekompensator 1 gebildete Gehäuse 12 trennt das im Inneren angeordnete Isolationsfluid hermetisch von der Umgebung. Diese hermetische Trennung gewährleistet die Integrität des Isolationssystems innerhalb des Schiebekompensators 1.

Die Beabstandung und Positionierung des elektrischen Leiters 10 relativ zu den Komponenten des Schiebekompensators 1 kann durch feste Isolatoren erreicht werden. Diese festen Isolatoren sind beispielsweise in Form von Scheiben quer zur Hauptachse 100 im ersten Rohrabschnitt 2 und/oder zweiten Rohrabschnitt 3 angeordnet.

In anderen Ausführungen werden säulenförmige Stützisolatoren zur Positionierung des elektrischen Leiters 10 verwendet. Diese säulenförmigen Isolatoren erstrecken sich beispielsweise entlang der Länge des jeweiligen elektrischen Leiters 10 und bieten strukturelle Unterstützung bei gleichzeitiger Aufrechterhaltung der elektrischen Isolation.

Die spezifische Anordnung und Anzahl der verwendeten festen Isolatoren hängt von Faktoren wie der Spannungsbemessung, den physikalischen Abmessungen und den mechanischen Anforderungen der jeweiligen elektrischen Energieübertragungsvorrichtung ab.

An den voneinander abgewandten Enden des ersten und zweiten Rohrabschnitts 2, 3 sind entsprechende Flanschelemente 20, 30 vorgesehen. Diese Flanschelemente 20, 30 ermöglichen die Verbindung des Schiebekompensators 1 mit weiteren Baugruppen.

In einigen Ausführungen sind die Flanschelemente 20, 30 als Ringflansche ausgebildet. Die Ringflansche können beispielsweise mit hier nicht gezeigten Aussparungen versehen sein, in denen Bolzen geführt werden, um die Flanschelemente 20, 30 gegen entsprechende Kontaktflächen der weiteren Baugruppen zu klemmen, zu positionieren und auf diese Weise eine druckdichte Verbindung herzustellen. Diese Anordnung ermöglicht sichere und einstellbare Verbindungen zwischen dem Schiebekompensator 1 und anderen Komponenten im elektrischen Energieübertragungssystem.

Um auf den ersten Rohrabschnitt 2 und den zweiten Rohrabschnitt 3 wirkende, durch den Innendruck des Isolationsfluids bedingte Kräfte zu kompensieren, die zu einem Auseinanderwandern der beiden Rohrabschnitte 2, 3 führen könnten, stellt der Schiebekompensator 1 einen Kompensationsmechanismus 14 bereit.

Zur Ausbildung des Kompensationsmechanismus 14 ist ein Kolbenelement 4 starr mit dem ersten Rohrabschnitt 2 verbunden.

Eine Zylinderwand 38, die zwischen ihrer inneren Mantelfläche und einer äußeren Mantelfläche des zweiten Rohrabschnitts 3 ein Kompensationsvolumen 92 definiert, ist starr mit dem zweiten Rohrabschnitt 3 verbunden. In dem gezeigten Ausführungsbeispiel ist die Zylinderwand 38 einstückig mit dem zweiten Rohrabschnitt 3 ausgebildet.

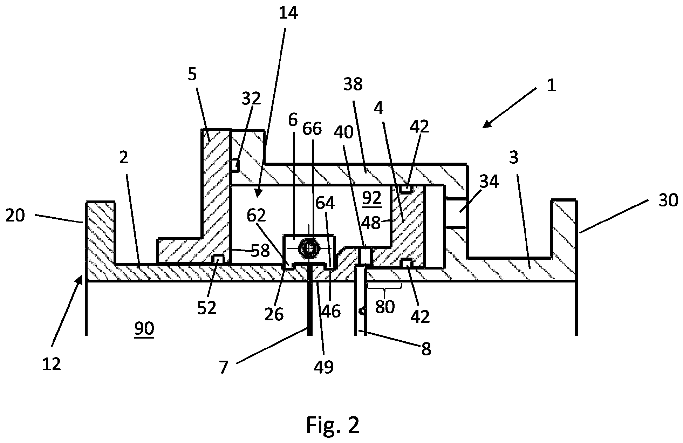

Besonders gut ist der Aufbau des Kompensationsmechanismus 14 in der Figur 2 zu erkennen, die eine Ausschnittsvergrößerung aus Figur 1 ist.

Das Kolbenelement 4 ist verschieblich und dichtend zwischen der inneren Mantelfläche der Zylinderwand 38 und der äußeren Mantelfläche des zweiten Rohrabschnitts 3 eingepasst, wodurch das Kompensationsvolumen 92 auf einer Seite begrenzt wird.

Das Kolbenelement 4 weist eine Kolbenfläche 48 auf, die entgegen der Wirkrichtung der auf den ersten Rohrabschnitt 2 wirkenden innendruckbedingten Kräfte orientiert ist. Die Kolbenfläche 48 ist eine Ringfläche und ist so dimensioniert, dass sie der Wirkfläche der auf den ersten Rohrabschnitt 2 wirkenden innendruckbedingten Kräfte entspricht. Auf diese Weise können die auf den ersten Rohrabschnitt 2 wirkenden innendruckbedingten Kräfte durch die Kolbenfläche 48 des Kolbenelements 4 kompensiert werden.

Das Kompensationsvolumen 92 wird an seiner der Kolbenfläche 48 gegenüberliegenden Seite durch eine Kopfringfläche 58 eines Kopfringelements 5 begrenzt. Das Kopfringelement 5 ist starr mit der Zylinderwand 38 verbunden und schließt verschieblich abdichtend mit der äußeren Mantelfläche des ersten Rohrabschnitts 2 ab.

Ein Dichtungskörper 52 stellt eine fluiddichte Verbindung zwischen der Kopfringfläche 5 und der äußeren Mantelfläche des ersten Rohrabschnitts 2 her.

Die Kopfringfläche 58 ist so orientiert, dass die entgegen der Wirkrichtung der auf den zweiten Rohrabschnitt 3 wirkenden innendruckbedingten Kräfte orientiert ist. Die Kopfringfläche 58 ist eine Ringfläche und ist so dimensioniert, dass sie der Wirkfläche der auf den zweiten Rohrabschnitt 3 wirkenden innendruckbedingten Kräfte entspricht. Auf diese Weise können die auf den zweiten Rohrabschnitt 3 wirkenden innendruckbedingten Kräfte durch die Kopfringfläche 58 des Kopfringelements 5 kompensiert werden.

Diese Konfiguration ermöglicht relative Bewegungen zwischen den beiden Rohrabschnitten 2, 3, die nahezu frei von Kompressions- oder Expansionskräften sind, die von dem Isolationsfluid innerhalb des Gehäuses 12 ausgehen könnten.

Die starre Verbindung zwischen der Zylinderwand 38 und dem zweiten Rohrabschnitt 3 kann durch teilweise einstückiges Ausbilden der Zylinderwand 38 am zweiten Rohrabschnitt 3 erreicht werden. Diese Anordnung zusammen mit dem Kopfringelement 5 ermöglicht eine relative Bewegung zwischen den beiden Rohrabschnitten 2, 3 bei gleichzeitiger Aufrechterhaltung einer abgedichteten Umhüllung für das Kapselungsvolumen 90 und das Kompensationsvolumen 92.

Der erste Rohrabschnitt 2 und der zweite Rohrabschnitt 3 haben in dem gezeigten Ausführungsbeispiel einen kreisförmigen Querschnitt. Das Kolbenelement 4 ist mit seiner Ringstruktur koaxial zur Hauptachse 100 ausgerichtet. Die Zylinderwand 38 ist ebenfalls koaxial zur Hauptachse 100 ausgerichtet.

Das Kolbenelement 4 weist in seinem Anbindungsabschnitt 49 zum Anbinden an das erste Rohrabschnitt 2 einen Innendurchmesser auf, der dem Innendurchmesser des ersten Rohrabschnitts 2 entspricht. Mit anderen Worten weist das Kolbenelement in seinem Anbindungsabschnitt 49 einen Ring mit einem Innendurchmesser auf, der dem ersten Rohrabschnitt 2 entspricht.

Das Kolbenelement 4 und insbesondere der Anbindungsabschnitt 49 des Kolbenelements 4 liegt direkt an dem entsprechenden Endabschnitt des ersten Rohrabschnitts 2 an. Zwischen dem ersten Rohrabschnitt 2 und dem Kolbenelement 4 liegt daher ein Verbindungsspalt 7 vor, an welchem die entsprechenden Stirnseiten des Anbindungsabschnitts 49 des Kolbenelements 4 und des Endabschnitts des ersten Rohrabschnitts 2 aneinander anstoßen beziehungsweise aneinander anliegen.

Durch das direkte Anliegen des ersten Rohrabschnitts 2 an dem Kolbenelement 4 kann gegenüber der aus dem Stand der Technik bekannten Schraubverbindung auch eine Verlängerung des möglichen Kompensationswegs 80 erreicht werden, denn es gibt in der vorgeschlagenen Ausbildung keine überlappenden Komponenten, die den Schiebekompensator 1 verkürzen würden.

Der erste Rohrabschnitt 2 und das Kolbenelement 4 sind mittels eines Klemmrings 6 starr miteinander verbunden. Der Klemmring 6 überbrückt dabei den Verbindungsspalt 7 zwischen den Stirnflächen des ersten Rohrabschnitts 2 und des Kolbenelements 4.

Der Klemmring 6 umfasst in der Schnittdarstellung zwei radial nach innen ragende Vorsprünge 62, 64. Ein erster Vorsprung 62 ragt zur Herstellung der Verbindung zwischen dem ersten Rohrabschnitt 2 und dem Kolbenelement 4 formschlüssig in eine ringförmige Nut 26 im äußeren Mantel des ersten Rohrabschnitts 2. Ein zweiter Vorsprung 64 ragt formschlüssig in eine ringförmige Nut 46 im äußeren Mantel des Kolbenelements 4.

Die nach innen ragenden Vorsprünge 62, 64 sind am Klemmring 6 natürlich ebenfalls ringförmig ausgebildet.

Mit anderen Worten hält der Klemmring 6 das Kolbenelement 4 und den ersten Rohrabschnitt 2 durch die Bereitstellung eines Formschlusses zusammen. Der Klemmring 6 stellt quasi eine den ersten Rohrabschnitt 2 und das Kolbenelement 4 verbindende, formschlüssige Klammer bereit.

Diese Anordnung bietet eine sichere und starre Verbindung zwischen dem ersten Rohrabschnitt 2 und dem Kolbenelement 4.

Eine solche Konfiguration bietet den Vorteil einer vereinfachten und zuverlässigeren Verbindung zwischen dem ersten Rohrabschnitt 2 und dem Kolbenelement 4, was eine einfachere Montage und Wartung ermöglicht und gleichzeitig eine sichere Befestigung gewährleistet.

Die Verwendung des Klemmrings 6 führt weiterhin dazu, dass die Druckbelastbarkeit des Schiebekompensators 1 und insbesondere der Verbindung zwischen dem ersten Rohrabschnitt 2 und dem Kolbenelement 4 verbessert werden kann. Dies ist unter anderem der Tatsache geschuldet, dass bei der Verwendung des hier vorgeschlagenen Klemmrings 6 anstelle einer aus dem Stand der Technik bekannten Gewindeverbindung zwischen dem ersten Rohrabschnitt 2 und dem Kolbenelement 4 eine durch das Schneiden und Bereitstellen des Gewindes hervorgerufene Materialschwächung vermieden werden kann.

Insbesondere kann durch die hier vorgeschlagene Konstruktion unter Verwendung des Klemmrings 6 erreicht werden, dass die Materialstärken im Verbindungsbereich zwischen dem ersten Rohrabschnitt 2 und dem Kolbenelement 4 unangetastet bleiben können, wobei das Bereitstellen der Verbindungsnuten 26, 46 selbst in diesen Bereichen zu einer höheren Materialstärke führt, als aus dem Stand der Technik bekannt.

Mit anderen Worten können bei der vorgeschlagenen Verbindung zwischen dem ersten Rohrabschnitt 2 und dem Kolbenelement 4 höhere Materialquerschnitte verwendet werden. Dies ist schematisch in den Figuren 1 und 2 gut zu erkennen, denn die Materialstärke des ersten Rohrabschnitts 2 im Bereich der Anbindung und im Bereich der Stirnfläche entspricht im Wesentlichen der Materialstärke des Anbindungsabschnitts 49 des Kolbenelements 4.

Durch die Verschiebbarkeit des ersten Rohrabschnitts 2 und des starr daran angeordneten Kolbenelements 4 relativ zum zweiten Rohrabschnitt 3 ergibt sich zwischen dem ersten Rohrabschnitt 2 beziehungsweise einer Stirnfläche des daran starr angeordneten Kolbenelements 4 und dem zweiten Rohrabschnitt 3 ein Verschiebespalt 8. Der Verschiebespalt 8 kann in seiner Breite variieren, denn der erste Rohrabschnitt 2 und der zweite Rohrabschnitt 3 sind entlang der durch die Hauptachse 100 definierten Richtung gegeneinander verschieblich angeordnet.

Die variierende Breite des Verschiebespalts 8 ist durch das Bezugszeichen 80 angedeutet, das einen möglichen Verschiebeweg 80 andeutet.

Das Kolbenelement 4 umfasst mindestens eine Ausgleichsöffnung 40, die das Kapselungsvolumen 90 mit dem Kompensationsvolumen 92 verbindet. Es können auch mehrere Ausgleichsöffnungen 40 um den Umfang herum vorgesehen sein.

Die Ausgleichsöffnungen 40 sind in Form von Bohrungen eingebracht, wobei die Achsen der Ausgleichsöffnungen 40 radial zur Hauptachse 100 des Schiebekompensator 1 ausgerichtet sind.

Die Ausgleichsöffnungen 40 sind im Bereich des Verschiebespalts 8 angeordnet, um einen Durchgang des jeweiligen Isolationsfluids von dem Kompensationsvolumen 92 in das Kapselvolumen 90 und andersherum zu ermöglichen.

Entsprechend wird eine Fluidverbindung zwischen dem Kapselungsvolumen 90 und dem Kompensationsvolumen 92 ausgebildet. Damit wird erreicht, dass der Innendruck im Kapselungsvolumen 90 und im Kompensationsvolumen 92 gleich ist, da das Isolationsfluid zwischen den beiden Volumina ausgetauscht werden kann, so dass die oben beschriebene Kompensation der innendruckbedingten Kräfte erreicht werden kann.

Um eine Dichtungswirkung des Kolbenelements 4 gegenüber der äußeren Mantelfläche des zweiten Rohrabschnitts 3 und der inneren Mantelfläche der Zylinderwand 38 zu erzielen, sind Dichtungsnuten 42 im Kolbenelement 4 vorgesehen. Die Dichtungsnuten 42 sind zur Aufnahme eines elastomeren Dichtungskörpers ausgebildet, der hier nicht gezeigt ist.

Zur Führung und Abstützung des Kolbenelements 4 auf der äußeren Mantelfläche des zweiten Rohrabschnitts 3 können ringförmige Gleitlager vorgesehen sein, die in den Figuren aber ebenfalls nicht gezeigt sind. Die Gleitlager stellen sicher, dass das Kolbenelement 4 mit seiner kreisringförmigen Kolbenfläche 48 sowohl an der inneren Mantelfläche der Zylinderwand 38 als auch auf der äußeren Mantelfläche des zweiten Rohrabschnitts 3 verschieblich anliegt.

Eine Belüftungsöffnung 34 kann in der Zylinderwand 38 in einem Bereich des Kolbenelements 4 vorgesehen sein, der vom Kompensationsvolumen 92 abgewandt ist. Diese Belüftungsöffnung 34 hilft, den Aufbau von Überdruck oder Unterdruck innerhalb des Schiebekompensators 1 während des Betriebs zu vermeiden.

Der erste Rohrabschnitt 2, der zweite Rohrabschnitt 3, das Kolbenelement 4 und die Zylinderwand 38 können elektrisch leitfähig sein. Diese elektrische Leitfähigkeit ermöglicht eine effektive Abschirmung und Erdung des Schiebekompensators 1 bei der Verwendung in elektrischen Energieübertragungsanwendungen.

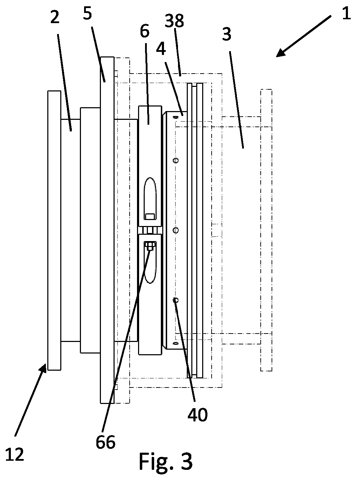

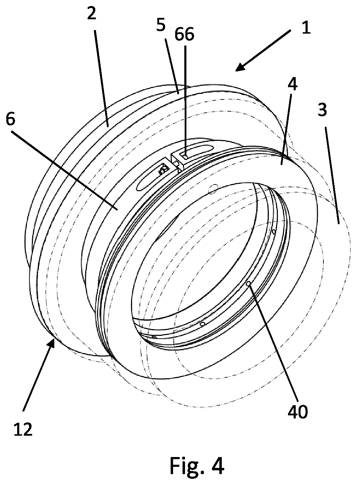

Wie in den Figuren 3 und 4 gezeigt ist, welche jeweils Außenansichten des Schiebekompensators 1 zeigen, wobei Teile des zweiten Rohrabschnitts 3 und der Zylinderwand 38 ausgeblendet sind, kann der Klemmring 6 mindestens zwei Hälften aufweisen. Auf diese Weise lässt sich der Klemmring 6 einfach montieren und auf diese Weise eine einfache und sichere Verbindung zwischen dem ersten Rohrabschnitt 3 und dem Kolbenelement 4 herstellen.

Mindestens eine Verbindungsschraube 66 ist zum Verbinden der zwei Hälften des Klemmrings 6 vorgesehen. Dieses zweiteilige Design des Klemmrings 6 erleichtert die Montage und Wartung des Schiebekompensators 1.

In dem oben zu den Figuren 1 bis 4 beschriebenen Ausführungsbeispiel hatte, wie beschrieben, der Anbindungsabschnitt 49 des Kolbenelements 4 den gleichen Durchmesser wie der entsprechende Endabschnitt des ersten Rohrabschnitts 3. Der Klemmring 6 ist in diesem Ausführungsbeispiel entsprechend im Wesentlichen symmetrisch auf seiner Unterseite ausgebildet. Zumindest sind die Innendurchmesser der radial nach innen ragenden Vorsprünge 62, 64 des Klemmrings 6 identisch.

Mit anderen Worten hat der Klemmring 6 in diesem Ausführungsbeispiel eine symmetrische Innenseite, denn es müssen keine Durchmesserunterschiede zwischen dem ersten Rohrabschnitt 2 und dem Kolbenelement 4 ausgeglichen werden.

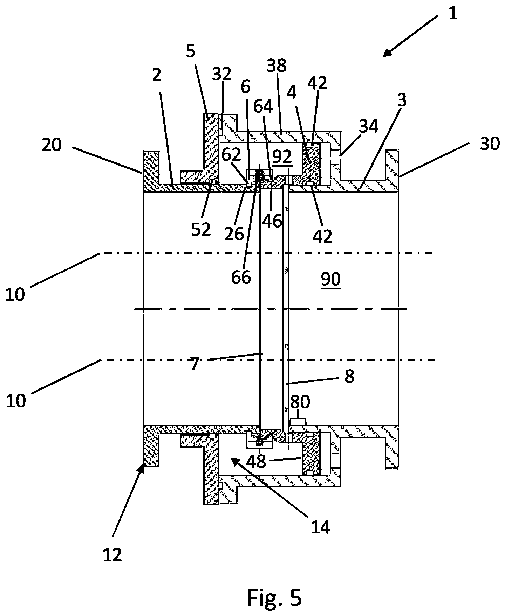

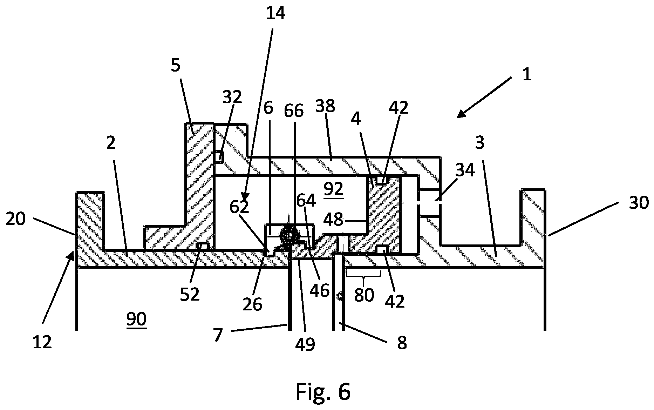

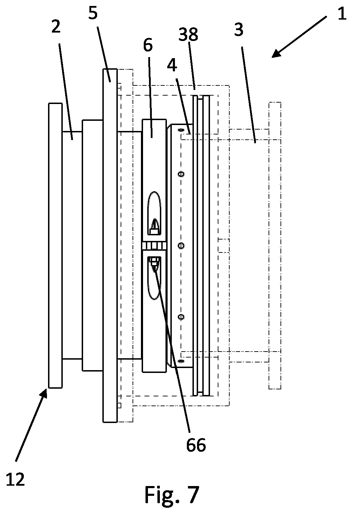

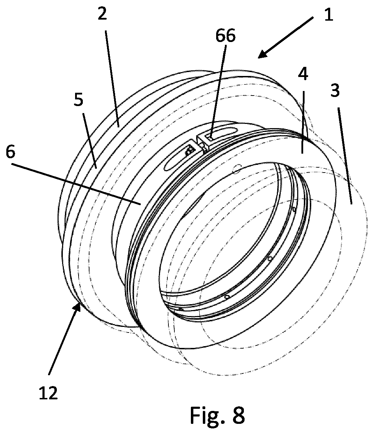

In dem nachfolgend beschriebenen weiteren Ausführungsbeispiel, das schematisch in den Figuren 5 bis 8 gezeigt ist, ist hingegen der Durchmesser des Anbindungsabschnitts 49 des Kolbenelements 4 größer als der entsprechende Endabschnitt des ersten Rohrabschnitts 3. Mit anderen Worten sind die Durchmesser der über den Verbindungsspalt 7 hinweg zu verbindenden Komponenten unterschiedlich.

In dem Ausführungsbeispiel der Figuren 5 bis 8 haben entsprechend auch die ringförmige Nut 26 des ersten Rohrabschnitts 2 und die ringförmige Nut 46 des Kolbenelements 4 unterschiedliche Durchmesser. Mit anderen Worten liegen die beiden Verbindungsnuten 26, 46 auf unterschiedlichen Niveaus.

Um dennoch eine Verbindung mittels des Klemmrings 6 zu erreichen, hat der erste nach innen ragende Vorsprung 62 des Klemmrings 6 einen anderen radialen Durchmesser, als der zweite nach innen ragende Vorsprung 64. Mit anderen Worten liegen der erste nach innen ragende Vorsprung 62 und der zweite nach innen ragende Vorsprung 64 auf unterschiedlichen Niveaus.

Entsprechend hat der Klemmring 6 eine asymmetrische Innenseite, um die Durchmesserunterschiede zwischen dem ersten Rohrabschnitt 2 und dem Kolbenelement 4 auszugleichen. Dieses asymmetrische Design ermöglicht einen ordnungsgemäßen Sitz und eine ordnungsgemäße Abdichtung auch dann, wenn sich die Außendurchmesser der verbundenen Komponenten unterscheiden.

Eine starre Verbindung des ersten Rohrabschnitts 2 mit dem Kolbenelement 4 kann entsprechend wieder dadurch hergestellt werden, dass der Klemmring 6 so den Verbindungsspalt 7 überbrückend vorgesehen wird, dass der erste nach innen ragende Vorsprung 62 formschlüssig in die ringförmige Nut 26 des ersten Rohrabschnitts 2 eingreift und der zweite nach innen ragende Vorsprung 64 greift in die ringförmige Nut 46 des Kolbenelements 4 ein.

Mit anderen Worten überbrückt der Klemmring 6 die den Verbindungsspalt 7 und verbindet den ersten Rohrabschnitt 2 mit dem Kolbenelement 4 formschlüssig.

Die übrigen Komponenten, Funktionen und Effekte in dem Ausführungsbeispiel der Figuren 5 bis 8 sind identisch zu denen, die oben bezüglich der Figuren 1 bis 4 beschrieben wurden. Um hier Redundanzen zu vermeiden, wird auf die Beschreibung oben verwiesen.

Ein Verfahren zum Zusammenbau des Schiebekompensators 1 für eine gasisolierte elektrische Energieübertragungsvorrichtung umfasst mehrere Schritte.

Das Verfahren beginnt mit dem Bereitstellen des ersten Rohrabschnitts 2 und dem Aufschieben des Kopfringelements 5 auf den ersten Rohrabschnitt 2.Der nächste Schritt umfasst das starre Verbinden des Kolbenelements 4 mit dem ersten Rohrabschnitt 2 durch das Aufbringen und Befestigen des Klemmrings **6.** Der Klemmring 6 wird dann fixiert und mit ihm die starre Verbindung zwischen dem Kolbenelement 4 und dem ersten Rohrabschnitt 2 hergestellt.

Dann wird der zweite Rohrabschnitt 3 koaxial zu dem ersten Rohrabschnitt 2 ausgerichtet und dann auf das Kolbenelement 4 aufgeschoben, wobei das Kolbenelement 4 dichtend zwischen der inneren Mantelfläche der Zylinderwand 38 des zweiten Rohrabschnitts 3 und der äußeren Mantelfläche des zweiten Rohrabschnitts 3 eingeführt wird.

Danach wird der zweite Rohrabschnitt 3 mit dem bereits auf dem ersten Rohrabschnitt 2 aufgeschobenen Kopfringelement 5 verbunden, beispielsweise durch Verschrauben.

In einigen Ausführungen umfasst das Verfahren zusätzliche Schritte. Wenn beispielsweise der Klemmring 6 in zwei Hälften bereitgestellt wird, umfasst das Verfahren das Verbinden dieser Hälften unter Verwendung mindestens einer Verbindungsschraube **66.** Dies ermöglicht eine einfachere Montage und potenzielle zukünftige Wartung des Schiebekompensator 1.

Der hier beschriebene Schiebekompensator ist für die industrielle Anwendung im Bereich der elektrischen Energieübertragungssysteme geeignet, insbesondere in gasisolierten Anlagen.

Der Schiebekompensator kann in Hochspannungs- und Höchstspannungssystemen eingesetzt werden, bei denen thermische Ausdehnung und Kontraktion von Komponenten aufgenommen werden müssen, während eine abgedichtete, isolierte Umgebung aufrechterhalten wird.

Der hier beschriebene Schiebekompensator ist für die industrielle Anwendung im Bereich der elektrischen Stromübertragungssysteme, insbesondere in gasisolierten Anlagen, geeignet.

Der Schiebekompensator kann in solchen Hochspannungs- und Höchstspannungssystemen eingesetzt werden, bei denen thermische Ausdehnung und Kontraktion von Komponenten berücksichtigt werden müssen, während gleichzeitig eine abgedichtete, isolierte Umgebung aufrechterhalten wird.

Soweit anwendbar, können alle in den Ausführungsformen dargestellten Einzelmerkmale miteinander kombiniert und/oder gegeneinander ausgetauscht werden, ohne den Rahmen der Erfindung zu verlassen.

### Bezugszeichenliste

1 Schiebekompensator
2 erster Rohrabschnitt
3 zweiter Rohrabschnitt
4 Kolbenelement
5 Kopfringelement
6 Klemmring
7 Verbindungsspalt
8 Verschiebespalt
10 elektrischer Leiter
12 Gehäuse
14 Kompensationsmechanismus
20 Anschlussflansch des ersten Rohrabschnitts
26 Verbindungsnut des ersten Rohrabschnitts
30 Anschlussflansch des zweiten Rohrabschnitts
32 Dichtungsnut
34 Belüftungsöffnung
38 Zylinderwand
40 Ausgleichsöffnung
42 Dichtungsnut
46 Verbindungsnut des Kolbenelements
48 Kolbenringfläche
49 Anbindungsabschnitt
52 Dichtungsnut
58 Kopfringfläche
62 Klemmvorsprung
64 Klemmvorsprung
66 Verbindungsschraube
80 Verschiebeweg
90 Kapselungsvolumen
92 Kompensationsvolumen
100 Hauptachse

## Patentansprüche

1. Schiebekompensator (1) für eine gasisolierte elektrische Energieübertragungsvorrichtung, umfassend:
einen ersten Rohrabschnitt (2) und einen zweiten Rohrabschnitt (3), die koaxial ausgerichtet und entlang einer Hauptachse (100) relativ zueinander beweglich sind, wobei der erste und zweite Rohrabschnitt (2, 3) jeweils einen Teil eines Kapselungsvolumens (90) begrenzen;
ein Kolbenelement (4), das starr mit dem ersten Rohrabschnitt (2) verbunden ist;
eine Zylinderwand (38), die starr mit dem zweiten Rohrabschnitt (3) verbunden ist, wobei das Kolbenelement (4) abdichtend und verschiebbar zwischen einer inneren Mantelfläche der Zylinderwand (38) und einer äußeren Mantelfläche des zweiten Rohrabschnitts (3) eingepasst ist, wodurch ein Kompensationsvolumen (92) begrenzt wird;
**dadurch gekennzeichnet, dass**
die starre Verbindung zwischen dem ersten Rohrabschnitt (2) und dem Kolbenelement (4) mittels eines Klemmrings (6) hergestellt ist.

2. Schiebekompensator (1) nach Anspruch 1, wobei der Klemmring (6) umfasst:
zwei radial nach innen ragende Vorsprünge (62, 64), wobei ein erster Vorsprung (62) in eine Verbindungsnut (26) in einem äußeren Mantel des ersten Rohrabschnitts (2) eingreift und ein zweiter Vorsprung (64) in eine Verbindungsnut (46) in einem äußeren Mantel des Kolbenelements (4) eingreift.

3. Schiebekompensator (1) nach Anspruch 2, wobei der radiale Durchmesser des ersten Vorsprungs (62) dem radialen Durchmesser des zweiten Vorsprungs (64) gleicht und der Klemmring (6) bevorzugt eine symmetrische Innenseite aufweist.

4. Schiebekompensator (1) nach Anspruch 2, wobei sich der radiale Durchmesser des ersten Vorsprungs (62) von dem radialen Durchmesser des zweiten Vorsprungs (64) unterscheidet und der Klemmring (6) bevorzugt eine asymmetrische Innenseite aufweist.

5. Schiebekompensator (1) nach einem der vorstehenden Ansprüche, wobei der Klemmring (6) mindestens zweiteilig ausgebildet ist und die Teile des Klemmrings (6) mittels jeweils einer Verbindungsschraube (66) miteinander verbunden sind, um den ersten Rohrabschnitt (2) mit dem Kolbenelement (4) starr zu verbinden, wobei bevorzugt der Klemmring (6) durch zwei Hälften ausgebildet ist, die jeweils mittels einer Verbindungsschraube (66) miteinander verbunden sind.

6. Schiebekompensator (1) nach einem der vorstehenden Ansprüche, wobei das Kolbenelement (4) mindestens eine Ausgleichsöffnung (40) aufweist, die das Kapselungsvolumen (90) mit dem Kompensationsvolumen (92) verbindet.

7. Schiebekompensator (1) nach Anspruch 6, wobei mindestens eine Ausgleichsöffnung (40) in Form einer Bohrung eingebracht ist, wobei die Bohrungsachse der Ausgleichsöffnung (40) radial zur Hauptachse (100) ausgerichtet ist.

8. Schiebekompensator (1) nach einem der vorhergehenden Ansprüche, wobei die Zylinderwand (38) einstückig mit dem zweiten Rohrabschnitt (3) ausgebildet ist, insbesondere einstückig mit diesem verbunden ist.

9. Schiebekompensator (1) nach einem der vorhergehenden Ansprüche, ferner umfassend eine Dichtungsnut (42), die in eine Wand des Kolbenelements (4) eingebracht ist, die der äußeren Mantelfläche des zweiten Rohrabschnitts (3) zugewandt ist, wobei die Dichtungsnut (42) zur Aufnahme eines elastomeren Dichtungskörpers ausgebildet ist.

10. Schiebekompensator (1) nach einem der vorhergehenden Ansprüche, umfassend eine Belüftungsöffnung (34), die in der Zylinderwand (38) in einem dem Boden des Kolbenelements (4) zugewendeten Bereich vorgesehen ist, der vom Kompensationsvolumen (92) durch das Kolbenelement (4) getrennt ist.

11. Schiebekompensator (1) nach einem der vorhergehenden Ansprüche, wobei der erste Rohrabschnitt (2), der zweite Rohrabschnitt (3), das Kolbenelement (4) und die Zylinderwand (38) elektrisch leitfähig sind.

12. Verfahren zum Bereitstellen eines Schiebekompensators (1) für eine gasisolierte elektrische Energieübertragungsvorrichtung, wobei das Verfahren umfasst:
Bereitstellen eines ersten Rohrabschnitts (2) und eines zweiten Rohrabschnitts (3);
Aufschieben eines Kopfringelements (5) auf den ersten Rohrabschnitt (2);
starres Verbinden eines Kolbenelements (4) mit dem ersten Rohrabschnitt (2);
koaxiales Ausrichten des ersten Rohrabschnitts (2) und des zweiten Rohrabschnitts (3);
dichtendes Einpassen des Kolbenelements (4) zwischen einer inneren Mantelfläche einer Zylinderwand (38) des zweiten Rohrabschnitts (3) und einer äußeren Mantelfläche des zweiten Rohrabschnitts (3); und
Verbinden des zweiten Rohrabschnitts (3) mit dem auf dem ersten Rohrabschnitt (5) aufgeschobenen Kopfringelement (5);
**dadurch gekennzeichnet, dass**
der Schritt des starren Verbindens des Kolbenelements (4) mit dem ersten Rohrabschnitt (2) umfasst:
Bereitstellen eines Klemmrings (6) und Verbinden des Kolbenelements (4) und des ersten Rohrabschnitts (2) mit dem Klemmring (6).

13. Verfahren nach Anspruch 12, wobei der Klemmring (6) zwei radial nach innen ragende Vorsprünge (62, 64) umfasst, wobei das Verfahren ferner umfasst:
das Einführen des ersten Vorsprungs (62) des Klemmrings (6) in eine Verbindungsnut (26) in einem äußeren Mantel des ersten Rohrabschnitts (2); und
das Einführen des zweiten Vorsprungs (64) des Klemmrings (6) in eine Verbindungsnut (46) in einem äußeren Mantel des Kolbenelements (4).

14. Verfahren nach Anspruch 12 oder 13, wobei der Klemmring (6) zumindest zwei Teile aufweist und alle Teile des Klemmrings (6) mittels Verbindungsschrauben (66) miteinander verbunden werden, um den ersten Rohrabschnitt (2) mit dem Kolbenelement (4) zu verbinden.
